Europäisches Patentamt

European Patent Office

Office européen des brevets

(11) Veröffentlichungsnummer: **0 339 295**
**A1**

## (12) EUROPÄISCHE PATENTANMELDUNG

(21) Anmeldenummer: **89105755.6**

(22) Anmeldetag: **01.04.89**

(51) Int. Cl.⁴: **D01G 27/00 , B65G 37/00 , B65H 67/06**

(30) Priorität: **14.04.88 CH 1378/88**

(43) Veröffentlichungstag der Anmeldung:
**02.11.89 Patentblatt 89/44**

(84) Benannte Vertragsstaaten:
**CH DE FR IT LI**

(71) Anmelder: **MASCHINENFABRIK RIETER AG**
**Postfach 290**
**CH-8406 Winterthur(CH)**

(72) Erfinder: **Scheurer, Paul**
**Brühlbergstrasse 20**
**CH-8400 Winterthur(CH)**

(54) **Fördersystem zur Überwindung von Höhendifferenzen.**

(57) Wattenwickel (48) bzw. Wickelhülsen werden zwischen zwei Stockwerken (22,24) eines Gebäudes durch einen sich senkrecht hin- und herbewegenden Etagenförderer (38) befördert. Die so beförderten Produkte werden horizontal zwischen dem Förderer (38) und Lieferstellen (32,34) auf den Stockwerken bewegt.

Fig.1

EP 0 339 295 A1

## Fördersystem zur Ueberwindung von Höhendifferenzen

Die Erfindung bezieht sich auf ein Fördersystem zur Beförderung von Zwischenprodukten zwischen zwei Stufen einer Verarbeitungslinie, wobei diese zwei Stufen verschiedenen Stockwerken eines Gebäudes zugeordnet sind.

Die Erfindung ist insbesondere, aber nicht ausschliesslich dafür konzipiert, sogenannte Wattewickel zwischen der Kämmereivorbereitung und der Kämmerei einer Spinnereianlage zu befördern.

Es sind Transportsysteme bekannt, um Wattewickel zwischen verschiedenen Stufen einer Spinnereianlage zu befördern - siehe z.B. Europäische Patentanmeldung Nr. 118600. Solche Systeme sind aber normalerweise dafür ausgelegt, die Wattewickel auf einer einzigen Ebene (Stockwerk) zu transportieren. Spinnereianlagen, die eine Kämmerei einschliessen, sind aber oft durch knappe Platzverhältnisse gekennzeichnet, so dass verschiedene Stufen der Gesamtverarbeitungslinie auf verschiedenen Stockwerken untergebracht werden müssen. Es kann also leicht vorkommen, dass die vorgeschaltete Stufe der Kämmerei (die Kämmereivorbereitung) auf einem oberen Stockwerk des Gebäudes untergebracht wird, während die nachgeschaltete Stufe (die eigentlichen Kämmaschinen) sich auf einem unteren Stockwerk befindet.

Aus wirtschaftlichen Gründen ist es heute üblich, die Zwischenprodukte der Kämmereivorbereitung (die Wattewickel) so gross (schwer) wie möglich herzustellen und mittels eines zweckmässig konzipierten Transportsystems an die Kämmaschine zu liefern, wobei der manuelle Eingriff durch das Bedienungspersonal auf einem Minimum gehalten wird. Dabei ist aber zu berücksichtigen, dass das Kämmereiverfahren hauptsächlich zur Herstellung von Garnen höherer Qualitäten benützt wird, was bedeutet, dass die Zwischenprodukte sehr schonend behandelt werden müssen, um das von den Maschinen erreichbare Qualitätsniveau nicht durch Beschädigungen im Logistiksystem zu beeinträchtigen.

Ausserdem sind Transportsysteme der Spinnerei den normalen Anforderungen an Logistiksysteme unterworfen, insbesondere der Notwendigkeit eines rationellen und geordneten Materialflusses zwischen den vor- und nachgeschalteten Stufen der Verarbeitungslinien.

Die Erfindung schlägt ein Fördersystem zur Förderung von Zwischenprodukten zwischen zwei Stockwerken eines Gebäudes vor. Das System beinhaltet eine hin und her bewegbare Fördervorrichtung zur Beförderung der Zwischenprodukte von einem Stockwerk zum anderen. Eine solche Fördervorrichtung stellt eine Diskontinuität im Gesamttransportsystem zwischen den vor-und nachgeschalteten Verarbeitungsstufen dar, d.h. die Zwischenprodukte können nicht zu beliebigen Zeitpunkten zwischen den Stockwerken transportiert werden, sondern sie sind vielmehr an die Verfügbarkeit der Fördervorrichtung gebunden. Es ist aber praktisch unmöglich, eine solche Fördervorrichtung in einem vorbestimmten Arbeitstakt gegenüber beiden vor-und nachgeschalteten Verarbeitungsstufen zu betreiben.

Dementsprechend ist die Erfindung dadurch gekennzeichnet, dass auf dem oberen Stockwerk eine erste Lieferstelle und auf dem unteren Stockwerk eine zweite Lieferstelle für die Zwischenprodukte vorgesehen ist und dass steuerbare Mittel vorhanden sind, um Zwischenprodukte zwischen der Fördervorrichtung und diesen Lieferstellen zu bewegen. Die Fördervorrichtung selber und die zwei Lieferstellen bilden eine gesteuerte Einheit, welche gemäss einem vorprogrammierten Ablauf unabhängig vom Arbeitstakt der Maschinen der vor- und nachgeschalteten Stufen betrieben werden kann. Vorzugsweise schliesst diese gesteuerte Einheit ein Ueberwachungssystem ein, um die Uebertragung der Zwischenprodukte zwischen der Fördervorrichtung und den Lieferstellen zu über wachen. Eine Steuerung für die gesteuerte Einheit kann dann so programmiert werden, dass Förderoperationen nur unter vorbestimmten Betriebszuständen der gesteuerten Einheit ausgeführt werden können.

Vorzugsweise finden Hin- und Herbewegungen der Fördervorrichtung in im wesentlichen vertikalen Richtungen statt, während Bewegungen der Zwischenprodukte zwischen der Fördervorrichtung und einer Lieferstelle und umgekehrt in im wesentlichen horizontalen Richtungen stattfinden.

Es können Träger für die Zwischenprodukte vorgesehen werden und das Fördersystem ist dann vorzugsweise so ausgelegt, dass ein Zwischenprodukt auf dem ihm zugeordneten Träger von der vorgeschalteten bis zur nachgeschalteten Maschine bleibt, d.h. auch während der Beförderung durch die hin und her bewegbare Fördervorrichtung. Die Fördervorrichtung ist dann vorzugsweise auch für die Beförderung von leeren Trägern zwischen den Stockwerken ausgelegt. Dazu kann die gesteuerte Einheit jeweilige Lieferstellen für die leeren Träger auf dem oberen bzw. unteren Stockwerk einschliessen.

Die Fördervorrichtung ist vorzugsweise zur gruppenweisen Beförderung von Zwischenprodukten zwischen den Stockwerken ausgelegt, wobei eine zu befördernde Gruppe von Zwischenprodukten eine vorbestimmte Anzahl solcher Produkte enthält. Die Produkte einer zu befördernden Gruppe können in mindestens einer Reihe (in einem Strang) in der Fördervorrichtung geordnet werden. Wo die Fördervorrichtung zur Beförderung sowohl leerer Träger wie auch Zwischenprodukte vorgesehen ist, dürfen die leeren Träger während der Förderbewegung gruppenweise entsprechend der gruppenweise Anordnung der Zwischenprodukte in der Fördervorrichtung geordnet werden.

Die Mittel zum Bewegen der Zwischenprodukte bzw. der leeren Träger zwischen der Fördervorrichtung und den Lieferstellen können zur gleichzeitigen Bewegung aller Zwischenprodukte bzw. aller leeren Träger ausgelegt werden. Diese Mittel können mit der Fördervorrichtung hin und her zwischen den Stockwerken bewegbar sein. Vorzugsweise beinhalten diese Mittel mindestens eine auf der Fördervorrichtung fest montierte Führungsschiene und ein bewegbares Element, um Zwischenprodukte bzw. leere Träger dieser Schiene entlang zu bewegen. Auf jedem Stockwerk kann dann eine entsprechende Führungsschiene angeordnet werden, um Zwischenprodukte bzw. leere Träger zwischen der Fördervorrichtung und der jeweiligen Lieferstelle zu leiten.

Eine solche Führungsschiene stellt ein Haltemittel für die Zwischenprodukte bzw. ihre Träger dar, wobei ein auf der Fördervorrichtung vorgesehenes Haltemittel eine andere Form als eine Führungsschiene haben kann. Die Fördervorrichtung kann mehreren solchen Haltemitteln zugeordnet werden, wobei jedes Haltemittel entweder für Zwischenprodukte oder für leere Träger vorbestimmt ist, d.h. wo die Haltemittel als Führungsschienen gebildet sind, kann die Fördervorrichtung mindestens zwei solchen Schienen zugeordnet werden, wobei die erste Schiene zum Tragen von Zwischenprodukten in die eine Förderrichtung, die zweite Schiene zum Tragen von leeren Trägern in die entgegengesetzte Förderrichtung bestimmt ist.

Das Fördersystem wird in der Praxis auch Mittel beinhalten, den Lieferstellen der gesteuerten Einheit Zwischenprodukte zuzustellen bzw. von den Lieferstellen der gesteuerten Einheit Zwischenprodukte abzutragen. Die Konstruktion solcher "Verteilermittel" hängt im wesentlichen von der Art und der Auslegung der vor- und nachgeschalteten Verarbeitungsstufen ab. In einer Spinnereianlage, wo die Fördervorrichtung zwischen der Kämmereivorbereitung und der Kämmerei eingeschaltet ist, kann die Fördervorrichtung einer einzigen Maschine der Kämmereivorbereitung, aber mehreren Maschinen der Kämmerei zugeordnet werden. Unter diesen Umständen kann die für die Fördervorrichtung vorgesehene Lieferstelle in der Nähe der Kämmereivorbereitung gleichzeitig als eine Lieferstelle für die Kämmereivorbereitungsmaschine dienen, während aber zusätzliche Transportmittel vorgesehen werden müssen, um Zwischenprodukte von der Lieferstelle in der Nähe der Kämmaschinen zu diesen Maschinen zu transportieren.

Eine Ausführung der Erfindung wird nun als Beispiel anhand der Zeichnungen näher beschrieben. Es zeigt:

Figur 1: Eine schematische Ansicht eines Fördersystems gemäss dieser Erfindung, um das Prinzip des Systems darzustellen,

Figur 2: Eine schematische Aufsicht eines der vorgeschalteten Stufe zugeordneten Teils eines Systems gemäss Figur 1 zur Beförderung von Wattewickeln (Zwischenprodukte) zwischen der Kämmereivorbereitung (der vorgeschalteten Stufe) und der nicht gezeigten Kämmerei (der nachgeschalteten Stufe) einer Spinnereianlage,

Figur 3: Eine Ansicht eines Details aus dem Systemteil von Figur 2,

Figur 4 bis 7: Der Systemteil von Figur 2 in verschiedenen Betriebszuständen,

Figur 8: Eine Aufsicht eines der nachgeschalteten Stufe zugeordneten Teils von einem System gemäss Figur 2 zur Beförderung von Wattewickeln zwischen der nicht gezeigten Kämmereivorbereitung (der vorgeschalteten Stufe) und der Kämmerei (der nachgeschalteten Stufe),

Figur 9: Der Systemteil von Figur 8 in einem anderen Betriebszustand, und

Figur 10: Ein Detail des in Figur 2 bis 9 gezeigten Systems.

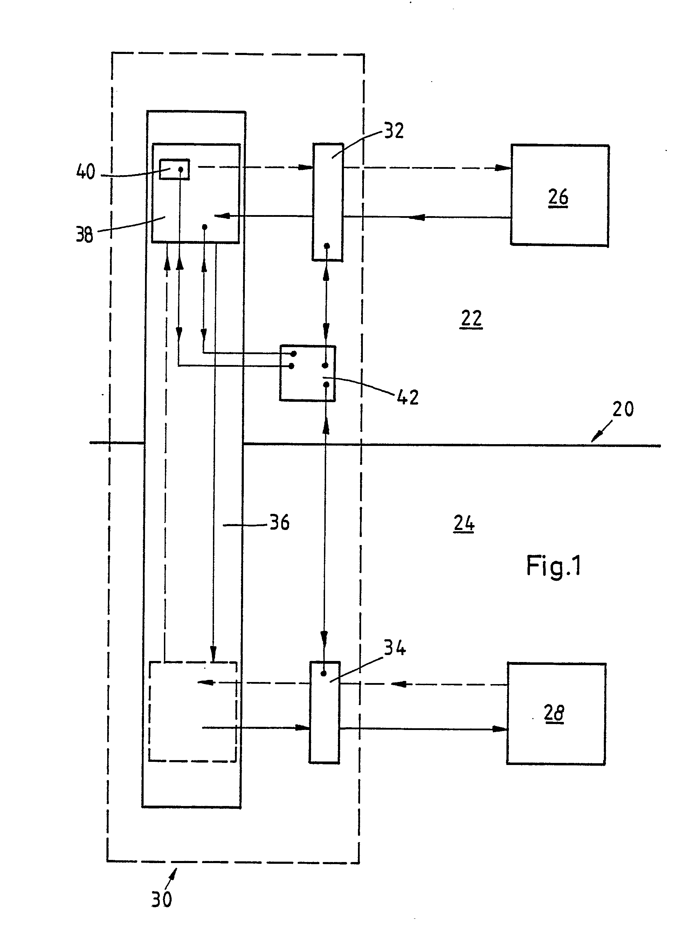

In Figur 1 stellt die mit dem Bezugszeichen 20 angedeutete Linie eine Trennfläche zwischen einem oberen Stockwerk 22 und einem unteren Stockwerk 24 dar. In dem oberen Stockwerk 22 befinden sich die Maschinen einer vorgeschalteten Stufe 26 in der Verarbeitungslinie einer Spinnereianlage, z.B. die Maschinen der Kämmereivorbereitung. Da der Maschinentyp für das Prinzip nicht wesentlich ist, ist die vorgeschaltete Stufe lediglich durch den "Kasten" 26 angedeutet. In dem unteren Stockwerk 24 befinden sich die Maschinen der entsprechenden nachgeschalteten Stufe 28, welche auch nur durch einen Kasten angedeutet wird. Der Ausstoss der vorgeschalteten Stufe 26 muss vom oberen in das untere Stockwerk befördert und der nachgeschalteten Stufe 28 vorgelegt werden. Gemäss dieser Erfindung wird diese Aufgabe durch ein Fördersystem gelöst, welches als Ganzes innhalb des gestrichelten Kastens mit dem Bezugszeichen 30 angedeutet ist.

Das Fördersystem 30 beinhaltet
- eine der Stufe 26 zugeordnete Lieferstelle 32,
- eine der nachgeschalteten Stufe 28 zugeordnete Lieferstelle 34,
- einen senkrechten Schacht 36 zwischen den Stockwerken und
- einen in dem Schacht 36 auf und ab bewegbaren Etagenförderer 38.

Der Etagenförderer 38 trägt selber ein hin und her bewegbares Element 40, um Zwischenprodukte der Stufe 26 von der Lieferstelle 32 auf den Förderer 38 und vom letzteren in die Lieferstelle 34 zu bewegen.

Ausserdem beinhaltet das ganze System 30 eine Steuerung 42, die mit den Lieferstellen 32, 34 dem Förderer 38 und dem Element 40 zur Signalübertragung verbunden ist. Jedes gesteuerte Aggregat (Lieferstelle 32, Lieferstelle 34, Förderer 38, Element 40) beinhaltet Sensoren zur Ueberwachung des Betriebszustandes des Aggregates und Aktoren zur Durchführung der für das jeweilige Aggregat vorgesehenen Operationen. Die Sensoren senden ihre Ausgangssignale an die Steuerung 42, welche Steuersignale an die Aktoren der verschiedenen Aggregate zurücksendet. Das System 30 funktioniert dementsprechend als von der Steuerrung 42 autonom gesteuerte Einheit, d.h. unabhängig von den Arbeitstakten der vor- und nachgeschalteten Stufen 26, 28.

Der senkrechte Schacht 36 nimmt sehr wenig Bodenfläche in Anspruch und kann daher entsprechend der oft sehr schwierigen Platzverhältnisse in eine Spinnerei integriert werden. Die Pendelbewegungen des Etagenförderers 38 stellen aber eine Diskontinuität im Materialfluss zwischen den Stufen 26 und 28 dar. Um dieses Problem zu überwinden, sind die Lieferstellen 32, 34 als "Schnittstellen" zwischen dem autonom funktionierenden Fördersystem 30 und der vor-und nachgeschalteten Stufen 26, 28 definiert.

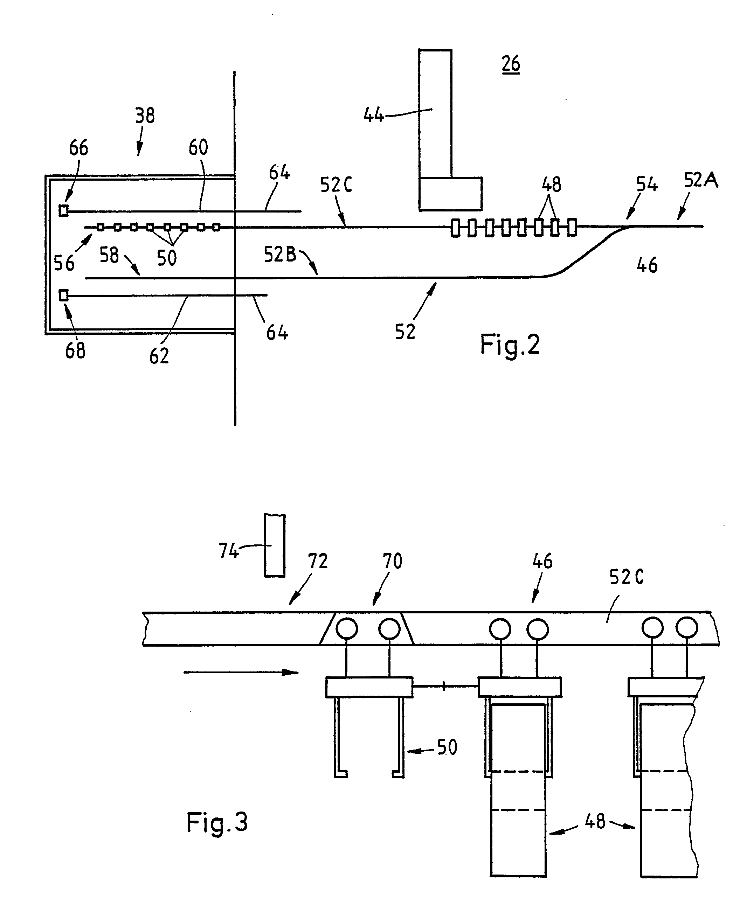

Der Materialfluss vom oberen in das untere Stockwerk ist mit den voll ausgezeichneten Pfeilen angedeutet, d.h. von der Stufe 26 in die Lieferstelle 32, daraus auf den Förderer 38, darauf den Schacht 36 hinab in das untere Stockwerk 24, davon in die Lieferstelle 34 und daraus in die nachgeschaltete Stufe 28. Es wird normalerweise einen entgegengesetzten Fluss von Produkteträgern stattfinden, was in Figur 1 mit den gestrichelten Pfeilen angedeutet ist. Das mit Figur 2 bis 10 dargestellte Beispiel ist so ausgelegt, dass sowohl der Materialfluss vom oberen in das untere wie auch der Rückfluss von Produkteträgern vom unteren in das obere Stockwerk durch ein "gemeinsames" Fördersystem 30 bewältigt werden kann.

Figur 2 zeigt eine schematische Aufsicht des oberen Stockwerkes 22 eines Systems gemäss Figur 1, wobei hier die vorgeschaltete Stufe 26 eine einzige wickelbildende Maschine 44 der Kämmereivorbereitung beinhaltet. Diese Maschine kann z.B. eine UNILAP-Maschine der Maschinenfabrik Rieter AG sein.

Eine schematisch angedeutete Hängebahn 46 (siehe auch Figur 3) ist dem Lieferende der Maschine 44 zugeordnet, um die von der Maschine 44 abgelieferten Wickeln 48 zu übernehmen. Zu diesem Zweck beinhaltet die Hängebahn 46 Greifvorrichtungen 50 (Figur 3), die je einen Wickel 48 aufnehmen können. Die Uebertragung der Wickel von der Maschine an die Hängebahn 46 ist nicht Gegenstand dieser Erfindung und wird hier nicht näher beschrieben. Diese Uebertragung kann aber gemäss dem in der Europäischen Patentanmeldung Nr. 118600 beschriebenen System erfolgen.

Die Hängebahn 46 umfasst in diesem Fall eine Y-förmige Führungsschiene 52 mit einer Weiche 54 (Figur 2) an der Abzweigstelle der Schiene. Diese Schiene umfasst dementsprechend eine gemeinsame Strecke 52A, eine erste Zweigstrecke 52B und eine zweite Zweigstrecke 52C. Die von der Maschine 44 gelieferten Wickel 48 werden unmittelbar vom Greifer 50 auf der zweiten Zweigstrecke 52C übernommen. Es werden acht Greifer 50 zu einem "Zug" oder Strang zusammengekoppelt und schrittweise an der Maschine 44 vorbeibewegt, um die von der Maschine ausgestossenen Wickel 48 eine nach dem anderen zu übernehmen und dabei eine Gruppe von acht Wickeln 48 (Figur 2) auf der Strecke 52C zu bilden.

Der Förderer 38 ist nochmals (ohne den Schacht 36) in Figur 2 schematisch angedeutet. Dieser Förderer 38 umfasst eine Schiene 56, die mit der Schienenstrecke 52C fluchtet, wenn der Förderer 38 in eine obere "Uebertragungsstelle" gebracht worden ist. Der Förderer 38 umfasst auch eine zweite Schiene 58, die mit der Strecke 52B fluchtet, wenn der Förderer 38 in der genannten oberen Uebertragungsstelle liegt. Eine erste Hilfsschiene 60 ist der Schiene 56 und eine zweite Hilfsschiene 62 ist der Schiene 58 zugeordnet. Die Hilfsschienen stehen parallel zu ihren jeweiligen Hauptschienen 56, 58. Jede Hilfsschiene 60, 62 ist einer im Stockwerk 22 fest montierten Fortsetzung 64 zugeordnet, die mit der jeweiligen Hilfsschiene 60, 62 fluchtet, wenn der Förderer 38 in der oberen Uebertragungsstelle liegt. Die erste Hilfsschiene 60 trägt einen ersten hin und her bewegbaren Läufer 66 und die zweite Hilfsschiene 62 trägt einen zweiten hin und her bewegbaren Läufer 68.

Wie nun anhand der Figuren 2 bis 7 näher beschrieben wird, ist die Schiene 56 zum Tragen von leeren Greifern 50 (Figur 3) vom unteren Stockwerk 24 (Figur 1) in das obere Stockwerk 22 vorgesehen. Die Schiene 58 hingegen ist für die Beförderung von mit Wickeln 48 beladenen Greifer 50 aus dem oberen Stockwerk 22 in das untere Stockwerk 24 vorgesehen.

Figur 2 zeigt eine "Grundstellung" des Systems. Der Etagenförderer 38 ist in der oberen Uebertragungsposition und die Schiene 56 trägt einen Strang von acht Leergreifern 50. Die Schiene 58 ist leer, d.h. steht bereit, einen Strang von acht mit Wickeln beladenen Greifer 50 von der Maschine 44 zu übernehmen. Der in das untere Stockwerk zu befördernde Greiferzug steht auf der Schienenstrecke 52C und wird schrittweise von links nach rechts (mit Blickrichtung der Figur 2) verschoben, um die Greifer 50 dieses Zuges der Reihe nach durch eine "Ladeposition" 70 (Figur 3) zu bewegen. Der momentan in der Ladeposition 70 stehende Greifer 50 übernimmt den nächsten von der Maschine 44 hergestellten Wickel 48, sobald dieser Wickel von der Maschine ausgestossen wird. Die schrittweise Bewegung des Greiferzuges durch die Ladeposition 70 erfolgt dementsprechend im Arbeitstakt der Maschine 44 und wird von einer Steuerung (nicht gezeigt) der Stufe 26 (der Maschine 44), d.h. unabhängig vom System 30 gesteuert.

Zum Einstieg in die Beschreibung des Ablaufes wird angenommen, der Greiferzug auf der Schienenstrecke 52C habe gerade den 7. Wickel 48 des Stranges von der Maschine 44 übernommen und auf Schienenhöhe erhoben und die Steuerung der Stufe 26 habe den "letzten" Bewegungsschritt des Greiferzuges durchgeführt, so dass ein Leergreifer 50 in der Ladeposition 70 steht (Figur 3). Dieser 8. Greifer 50 des Zuges steht nun bereit, den nächsten von der Maschine 44 ausgestossenen Wickel 48 zu übernehmen. Mit dem letzt genannten Bewegungsschritt des Zuges ist aber eine "Ueberwachungsposition" 72 links von der Ladeposition 70 "freigestellt worden", d.h. diese Ueberwachungsposition 72 auf der Schienenstrecke 52C wird nicht mehr von einem Greifer 50 besetzt. Die Besetzung bzw. Freistellung dieser Ueberwachungsposition 72 wird von einem geeigneten Sensor 74 überwacht und der Zustand dieser Ueberwachungsposition wird an die Steuerung 42 (Figur 1) des Systems 30 gemeldet.

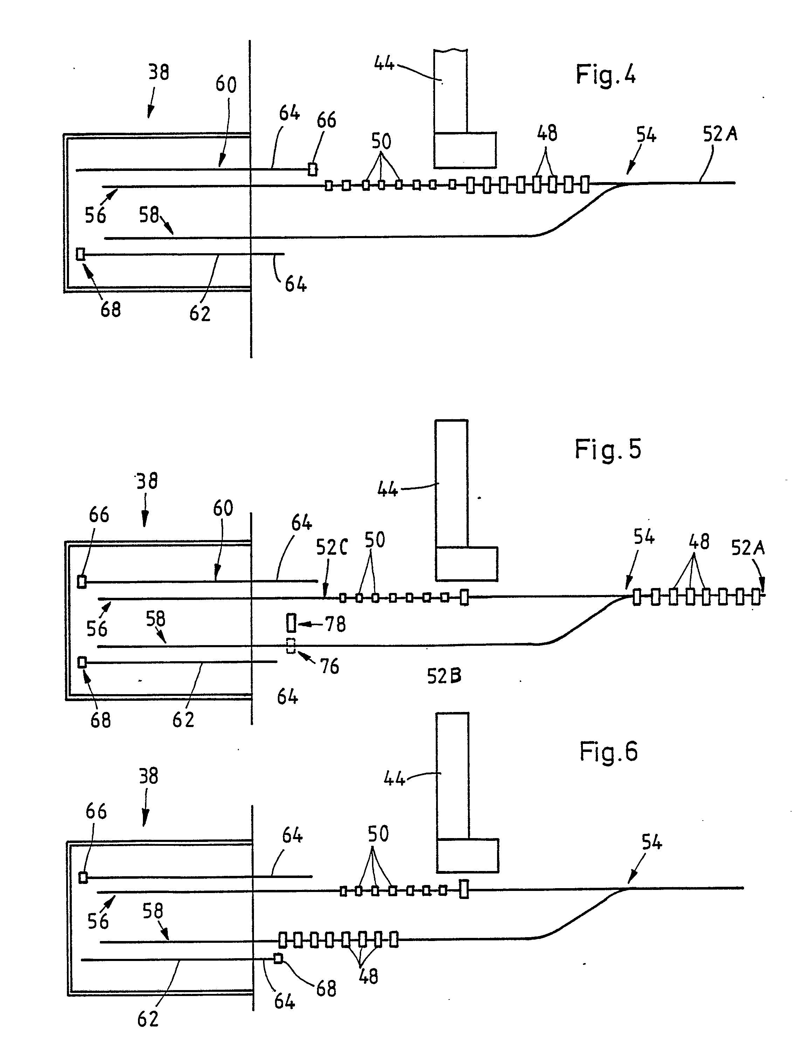

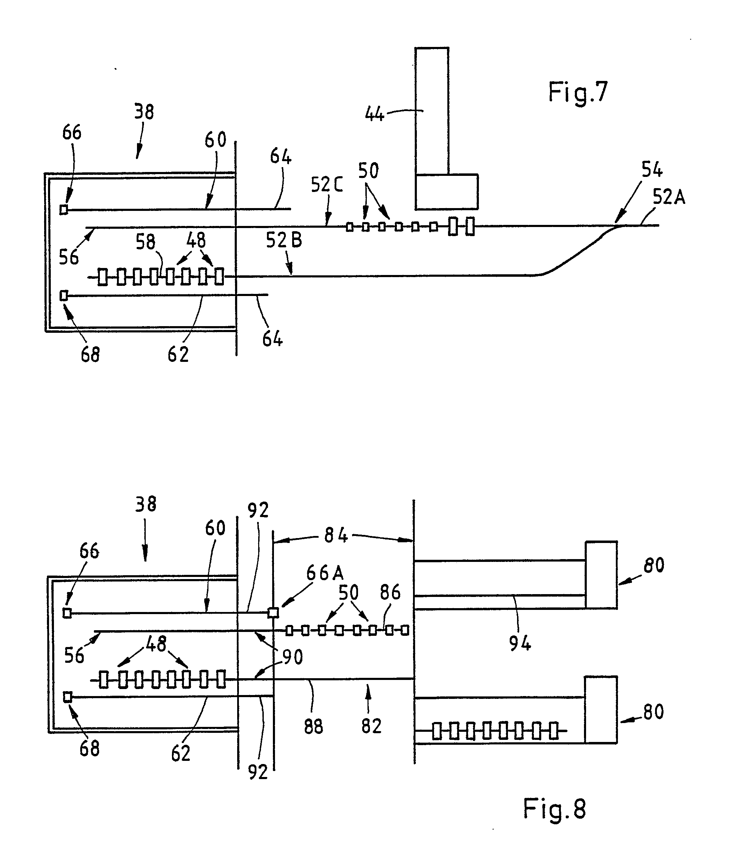

Sobald die Ueberwachungsposition 72 freisteht, sendet die Steuerung 42 ein Signal an den Läufer 66 (Figur 2), um eine Bewegung dieses Läufers von links nach rechts (nochmals mit Blickrichtung auf Figur 2) der Schiene 60 und ihrer Fortsetzung 64 entlang auszulösen. Durch eine geeignete Verbindung zwischen dem Läufer 66 und dem Zug der leeren Greifer 50 auf dem Etagenförderer 38 wird die Läuferbewegung eine entsprechende Bewegung des Leergreiferzuges von der Schiene 56 auf die Schienenstrecke 52C. Wenn der Läufer 66 eine Endstellung am rechten Ende der Schienenfortsetzung 64 erreicht (Figur 4), steht der vorderste Greifer 50 des neuen Greiferzuges in der Ueberwachungsposition 72 auf der Schienenstrecke 52C. Dieser Zustand wird wiederum der Steuerung 42 gemeldet. Der Läufer 66 wird somit in eine Startposition (Figur 2) auf den Etagenförderer 38 zurückgezogen und steht somit für weitere im Zusammenhang mit Figur 8 bis 10 zu beschreibenden Operationen bereit.

Der Teil der Schienenstrecke 52C zwischen dem Etagenförderer 38 bis und mit der Ueberwachungsposition 72 stellt somit die in Figur 1 schematisch dargestellte Lieferstelle 32 dar. Sobald das Fördersystem 30 den Leergreiferzug an diese Lieferstelle geliefert hat, überlässt es, der Stufe 26 (bzw. der Steuerung dieser Stufe) die weitere schrittweise Bewegung der Greifer dieses Zuges durch die Ladeposition 70 zu bewirken. Eine solche schrittweise Bewegung des neuen Zuges kann erst dann ausgelöst werden, wenn der letzte Greifer 50 des schon teilweise beladenen Zuges einen Wickel 48 von der Maschine 44 übernommen und auf Schienenhöhe erhoben hat und der nun fertig gestellte Wickelstrang sich weiterbewegt hat, um die Ladeposition 70 für den neuen Greiferzug freizustellen. Eine solche Weiterbewegung des Wickelstranges ist entweder manuell von der Bedienung durchzuführen oder automatisch von der Steuerung der Stufe 26 mittels geeigneter (nicht gezeichneter) Aktoren zu bewirken. Der Wickelstrang wird auf jeden Fall von der Schienenstrecke 52C auf die Schienenstrecke 52A bewegt, was eine entsprechende Einstellung der Weiche 54 erfordert, um die schrittweise Bewegung des neuen Zuges der Schienenstrecke 52C entlang zu ermöglichen.

Wenn die Weiterbewegung des Wickelstranges von der Bedienung abhängig ist, kann nicht sichergestellt werden, dass diese Bewegung sofort nach Bereitstellung des Wickelstranges durchgeführt wird. Falls diese Weiterbewegung nicht sofort erfolgt, kann die Maschine 44 trotzdem vorläufig weiterarbeiten und einen neuen Wickel 48 bereitstellen (und gegebenenfalls in Abhängigkeit von der Maschinenkonstruktion ausstossen, wobei im letzteren Fall einen zweiten neuen Wickel in der Maschine selber bereitgestellt werden kann). Wenn die Bedienung den Wickelstrang immer noch nicht weiterbewegt hat, um die Ladeposition 70 für den neuen Zug freizustellen, muss die Maschine 44 von der Steuerung der Stufe 26 vorläufig abgestellt werden.

Sobald dann die Weiterbewegung des Stranges von der Bedienung durchgeführt wird, kann die schrittweise Bewegung des neuen Zuges durch die Ladeposition 70 ausgelöst werden, so dass der neue Zug den schon bereitgestellten Wickel von der Maschine 44 abnimmt und die Maschine 44 selber wieder in Betrieb gesetzt wird. Ein solcher Zustand ist in Figur 5 dargestellt, wo der volle Wickelstrang auf der Schienenstrecke 52A steht, während der neue Greiferzug schon den ersten Wickel des neuen Stranges von der Maschine 44 übernommen hat. Mit einer automatischen Steuerung der Bewegungen des vollen Stranges würde der in Figur 5 dargestellte Zustand nicht vorkommen, da der volle Strang von der Schienenstrecke 52A in die Lieferstelle (Figur 1, 32) auf der Schienenstrecke 52B (Figur 6) weitergeführt würde, bevor die Maschine 44 ein neuer Wickel zur Verfügung stellen könnte.

Ob die Weiterbewegung des Stranges manuell oder automatisch betätigt wird, muss im Zwischenzustand von Figur 5 die Weiche 54 entsprechend manuell oder automatisch neu eingestellt werden, um die Weiterleitung des Stranges auf die Schienenstrecke 52B zu ermöglichen. Der volle Strang wird dann der Strecke 52B soweit entlang bewegt, bis der vorderste Greifer des Stranges in einer überwachten Position 76 (Figur 5) ankommt. Die Position 76 wird von einem Sensor 78 überwacht und die Besetzung dieser Position durch den ersten Greifer des neuen Stranges wird der Steuerung 42 (Figur 1) gemeldet. Die Steuerung 42 löst dann eine Bewegung des Läufers 68 aus einer Startposition (Figur 2) in eine Endstellung (Figur 6) am rechten Ende der Fortsetzung 64 von der Hilfsschiene 62 aus. Es wird dann eine geeignete Verbindung zwischen dem Läufer 68 und dem Wickelstrang hergestellt, so dass beim Zurückziehen des Läufers 68 in seine Startposition (Figur 7) der Wickelstrang auf die Schiene 58 (Figur 2) des Förderers 38 gezogen wird.

Der Förderer 38 bewegt sich nun nach unten in dem Schacht 36 (Figur 1) in eine "untere Uebertragungsposition" (Figur 8) im unteren Stockwerk 24. Die vorgeschaltete Stufe 26 (Kämmereivorbereitung) arbeitet in ihrem eigenen Arbeitstakt weiter und bereitet einen neuen Wickelstrang vor.

Die sich im unteren Stockwerk 24 befindende nachgeschaltete Stufe 28 (Figur 1) besteht in diesem Fall aus einer Mehrzahl von Kämmaschinen 80, wovon nur zwei abgebildet sind (Figur 8). Jede Kämmaschine 80 hat acht Arbeitsstellen, welche je durch einen Wickel mit einem Vlies zu speisen sind. Ein 8er Wickelstrang ist also einer der Maschinen 80 zuzustellen.

Die Zustellung eines Wickelstranges an eine ausgewählte Maschine 80 erfolgt über eine Verschiebebrücke 82, die sich den Schienen 84 entlang hin und her bewegen kann. Diese Schiebebrücke 82 selbst trägt zwei Schienen 86, 88, die mit den Schienen 56, 58 fluchten, wenn der Etagenförderer 38 in seiner unteren Uebertragungsposition und die Verschiebebrücke 82 in einer entsprechenden Aufnahmeposition (Figur 8) liegen. Die Verschiebebrücke 82 in dieser Aufnahmeposition stellt dementsprechend die mit dem Kasten 34 (Figur 1) angedeutete Lieferstelle des Fördersystems 30 dar. Im Stockwerk 24 fest montierte Schienenstücke 90 verbinden die Schienen 56, 58 des Etagenförderers 38 mit den Schienen 86, 88 der Verschiebebrücke 82, wenn die bewegbaren Aggregate für die Uebertragung von Wickeln positioniert sind. Im Stockwerk 24 sind auch Fortsetzungen 92 der Hilfsschiene 60 bzw. 62 des Etagenförderers vorhanden, ähnlich der schon beschriebenen Fortsetzungen 64 im oberen Stockwerk 22.

Die Bewegungen der Verschiebebrücke 82 den Schienen 84 entlang können manuell oder automatisch betätigt werden. Im letzteren Fall werden sie durch die Steuerung der nachgeschalteten Stufe 28 gesteuert, d.h. unabhängig von der Steuerung 42 des Fördersystems 30 (Figur 1). Die Brücke 82 ist dementsprechend nicht unbedingt in der Aufnahmeposition bei der Ankunft des Etagenförderers 38 in seiner unteren Uebertragungsposition. Die Uebertragung zwischen dem Förderer 38 und der Brücke 82 kann erst dann erfolgen, wenn die Brücke in ihrer Aufnahmeposition verriegelt ist und die Aufnahmebereitschaft an die Steuerung 42 gemeldet worden ist. Die Meldung an die Steuerung 42 kann von der Bedienung oder von der Brücke 82 selber bei der Ankunft in der Aufnahmeposition oder von einer automatischen Steuerung der Brücke 82 erfolgen.

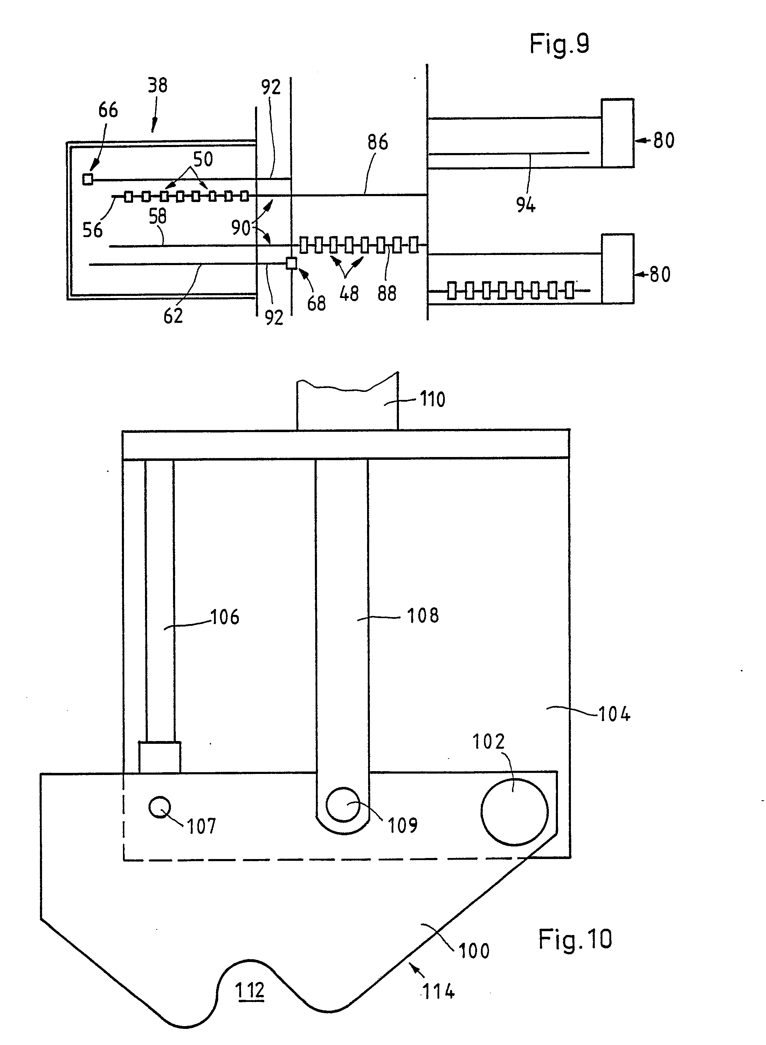

Nachdem die Steuerung 42 eine Meldung der Aufnahmebereitschaft der Brücke 82 erhalten hat, löst sie eine Bewegung des Läufers 68 aus der Startposition in die Endstellung am rechten Ende der Fortsetzung 92 von der Hilfsschiene 62 aus. Durch die vorerwähnte Verbindung zwischen dem Läufer 68 und dem Wickelstrang bewirkt die Läuferbewegung eine entsprechende Bewegung des Wickelstranges von der Schiene 58 des Etagenförderers 38 über dem Zwischenstück 90 auf die Schiene 88 der Verschiebebrücke 82 (Figur 9). Der Läufer 68 wird dann in seine Startstellung auf den Förderer 38 zurückgezogen. Die Beförderung des Wickelstranges aus der Lieferstelle 32 (Figur 1) des oberen Stockwerkes 22 in die Lieferstelle 34 des unteren Stockwerkes ist somit ausgeführt und die Weiterbehandlung des Stranges ist nun nicht mehr Sache des Fördersystems 30 und seiner Steuerung 42, sondern der Bedienung bzw. der nachgeschalteten Stufe 28 mit ihrer automatischen Steuerung. Es ist aber ein Rückfluss vom unteren Stockwerk 24 in das obere Stockwerk 22 notwendig und dieser Rückfluss wird nun kurz beschrieben werden.

Der Rückfluss besteht mindestens aus den Leergreifern 50, die vorher zur Beförderung eines Wickelstranges aus dem oberen Stockwerk in das untere Stockwerk gebracht wurden und nun nach Abladen der Wickel dieses Stranges an eine der Maschinen 80 zurück in das obere Stockwerk 22 gesandt werden sollte. Der zu befördernde Greiferzug sollte auf der Schiene 86 der Brücke 82 bereitstehen, wenn die Brücke in ihrer Aufnahmeposition verriegelt wird. Die Meldung der Aufnahmebereitschaft an die Steuerung 42 ist gleichzeitig die Meldung der Bereitschaft eines Greiferzuges auf der Schiene 86. Die Steuerung 42 löst dementsprechend eine Bewegung des Läufers 66 aus einer Startstellung in eine Endstellung 66A (Figur 8) am rechten Ende der Fortsetzung 92 der Hilfsschiene 60 aus. Nach Ankunft des Läufers 66 in dieser Endstellung 66A ist er automatisch mit dem Greiferzug gekoppelt, so dass der Zug beim Rückführen des Läufers 66 in seine Startposition über dem Zwischenstück 90 von der Schiene 86 auf die Schiene 56 des Etagenförderers 38 bezogen wird (Figur 9). Beim Zurückführen des Etagenförderers in seine obere Uebertragungsposition steht der Greiferzug bereit zur Uebertragung auf die Schienenstrecke 52C (Figur 2), wie schon vorher beschrieben wurde.

Es ist zusätzlich zu erwähnen, dass der Rückfluss nicht nur aus Leergreifern bestehen kann. Die Wickel 48 werden normalerweise auf Hülsen (nicht gezeigt) aufgewickelt und diese Hülsen müssen auch in das obere Stockwerk zur Maschine 44 zurückgeleitet werden. Die können dementsprechend von den "Leergreifern" getragen werden und an die Maschine 44 der Reihe nach bei Ankunft des "Leergreifers" in die Position 72 (Figur 3) an die Maschine 44 abgegeben werden.

Die Zustellung der Wickel des in das untere Stockwerk 24 beförderten Stranges an eine Kämmaschine 80 ist nicht Gegenstand dieser Erfindung und wird daher nicht in allen Einzelheiten beschrieben werden. Sie wird aus der Ueberlegung, den Figuren 8 bis 10 ohne weiteres klar werden.

Die Verschiebebrücke 82 wird aus ihrer Aufnahmeposition der Schiene 84 entlang verschoben, bis die nun leere Schiene 86 mit einer Führungsschiene 94 der ausgewählten Kämmaschine fluchtet. Der auf der Schiene 94 vorhandene Greiferzug (mit den von Greifern getragenen Hülsen) wird dann von der Schiene 94 auf die Schiene 86 geleitet. Diese Operation kann manuell oder automatisch durchgeführt werden. Die Brücke 82 wird dann weiterverschoben, bis die die den neuen Wik- kelstrang tragende Schiene 88 mit der gleichen Führungsschiene 94 fluchtet, wonach der Strang manuell oder automatisch von der Schiene 88 auf die Schiene 94 geleitet wird. Die Wickel des Stranges werden dann entweder manuell oder automatisch von den ihnen tragenden Greifern an die Arbeitsstellen der Maschine 80 abgegeben.

Die gezeigte Anordnung der Kämmaschinen 80 ist nur als Beispiel gegeben. Die Weiterbehandlung des Wickelstranges nach Abgabe an die Lieferstelle 34 (Figur 1) kann an die Maschinenanordnung im unteren Stockwerk 24 angepasst werden.

Die "Lieferstellen" sind vorzugsweise durch Klinken für die erste Einheit des Zuges bzw. des Stranges definiert, z.B. an die überwachte Position 72 (Figur 3), 76 (Figur 5) und die entsprechenden Stellen auf dem Förderer 38 und der Brücke 82 (Figuren 8 und 9). Ein Beispiel einer solchen Klinke ist in Figur 10 abgebildet. Sie besteht aus einem Profil 100, welches drehbar um eine Achse 102 auf einem Träger 104 montiert ist. Das Profil 100 ist in einer Arbeitsstelle (Figur 10) durch eine Federvorrichtung 106 (nur schematisch dargestellt) gehalten, die drehbar mit dem Profil verbunden ist (107).

Das Profil ist mit einer Aussparung 112 versehen, um einen Nocken (nicht gezeigt) auf dem ersten Greifer des Zuges (Stranges) aufzunehmen, wozu aber das Heben des Profils gegen die durch die Vorrichtung 106 ausgeübte Vorspannung notwendig ist, was durch Kontakt des Nockens mit der Fläche 114 ermöglicht wird.

Nachdem der Nocken in der Aussparung 112 arretiert wird, kann der Zug nicht weiterfahren, es sei denn das Profil 100 durch einen pneumatischen Zylinder 110 (nur teilweise angedeutet) über eine Verbindungsstange 109 und drehbare Verbindung 109 nochmals gegen die Vorspannung der Federvorrichtung 106 erhoben wird. Dieses Lösen der Arretierung geschieht nur, wenn ein entsprechendes Signal von der zutreffenden Steuerung ausgegeben wird bzw. wenn die Bedienung eine entsprechende Steuerung betätigt.

Die Erfindung ist nicht auf Einzelheiten des gezeigten Beispiels eingeschränkt. Die Wickel könnten z.B. einzeln nach unten befördert werden und die Gruppen (falls erwünscht) könnten erst im unteren Stockwerk gebildet werden. Der Rückfluss von Leergreifern bzw. Hülsen könnte über den gleichen oder einen anderen Etagenförderer bewirkt werden, z.B. könnten die Leergreifer über einen Kettenförderer wieder in das obere Stockwerk 22 gebracht werden. Da die Hülsen bei weitem nicht so empfindlich wie die Wickel sind, müssen für die Rückbeförderung der Hülsen nicht die gleichen Vorkehrungen getroffen sein wie für die Wickelbeförderung. Die Hülsen könnten z.B. aneinander gelegt werden und in einem geeigneten Behälter wieder nach oben gebracht werden.

Um das Qualitätsniveau der Wickel zu gewährleisten wie auch Brandschutzbestimmungen zu genügen, ist es vorteilhaft, den Etagenförderer 38 als einen schliessbaren Kasten mit Vordertüren vorzusehen, die geöffnet werden müssen, um die Uebertragung zwischen dem Förderer und einer Lieferstelle durchzuführen. Das Oeffnen bzw. Schliessen dieser Türe kann von der Steuerung 42 ausgelöst werden, und zwar erst dann, wenn Ueberwa- chungsgeräte (Sensoren) melden, dass vorbestimm- te Bedingungen erst erfüllt worden sind bzw. vor- bestimmte Zustände herrschen. Insbesondere kön- nen die Türen geschlossen bleiben, bis die Lieferstelle 32 bzw. 34 aufnahme- bzw. ablieferbereit ist. Der Etagenförderer 38 wird erst dann von einer Uebertragungsposition in die andere bewegt, wenn die Türen geschlossen worden sind und dies wiederum erfolgt erst, nachdem geeignete Sensoren an die Steuerung 42 melden, dass ein Wickelstrang bzw. ein Greiferzug richtig innerhalb des Förderkastens positioniert worden ist. Wenn die zu befördernden Zwischenprodukte nicht so empfindlich wie Wickel sind, kann der Förderer einfacher konstruiert werden. Z.B. wenn Kannen mit Kardenband zwischen den Stockwerken zu befördern sind, genügen die Kannen selber, um das Kardenband zu schützen, so dass die Kastenbauweise für den Etagenförderer unnötig ist.

Im als Beispiel dargestellten System wird entweder ein Wickelstrang oder ein Greiferzug ohne Wickel zwischen den Stockwerken befördert. Es ist also nicht unbedingt notwendig, das Fördergerät 38 mit zwei Schienen (56, 58) zu versehen. Eine einzige Schiene könnte z.B. bewegbar auf dem Förderer 38 montiert werden und seitlich zwischen Aufnahme- und Ablieferstellen entsprechend den Schienen 52B, 52C bzw. 86, 88 bewegt werden. Als eine andere Variante könnte der Förderer selber in der Höhe verstellbar sein, um eine einzige Schiene zwischen einer Abliefer- und einer Aufnahmestelle zu bewegen, was eine entsprechende Anordnung der Aufnahme- bzw. Ablieferschienen der Lieferstellen 32, 34 erfordert.

Als weitere Varianten könnten die Schienen der Lieferstellen bewegbar sein, um mit einer einzigen auf dem Förderer 38 vorhandenen Schiene zusammenzuarbeiten. Dies ist für die Verschiebebrücke 82 schon der Fall. Wenn bewegbare Schienen in der Kämmereivorbereitung unerwünscht sind, könnte die in Figur 2 gezeigte Anordnung durch eine zusätzliche Weiche zwischen der Maschine 44 und dem Förderer 38 angepasst werden.

Ein Etagenförderer könnte mehr als eine Maschine in der vorgeschalteten Stufe 26 bedienen. Es müsste dann aber ein entsprechendes Verteilersystem zwischen der Lieferstelle 32 und der Stufe 26 vorgesehen werden. In solchen Verteilersystemen (in beiden Stockwerken) könnte geeignete Pufferzonen vorgesehen werden, um die Arbeitstakte der Verarbeitungsstufen 26, 28 noch unabhängiger voneinander und von der Kapazität des Fördersystems zu machen.

Der Etagenförderer 38 samt seinem Zubehör (Läufer 66, 68, Schiene 56, 58, 60, 62 usw.) kann ein käuflich erhältliches Produkt sein, z.B. ein entsprechendes Produkt der Firma Mannesmann Demag. Dementsprechend ist dieser Teil hier nicht näher beschrieben worden.

## Ansprüche

1. Ein Fördersystem zur Förderung von Zwischenprodukten zwischen zwei Stockwerken eines Gebäudes mit einer hin- und herbewegbaren Fördervorrichtung zur Beförderung der Zwischenprodukte von einem Stockwerk zum anderen dadurch gekennzeichnet, dass auf dem oberen Stockwerk eine erste Lieferstelle und auf dem unteren Stockwerk eine zweite Lieferstelle für die Zwischenprodukte vorgesehen ist und dass steuerbare Mittel vor-handen sind, um Zwischenprodukte zwischen der Fördervorrichtung und diesen Lieferstellen zu bewegen.

2. Ein Fördersystem gemäss Anspruch 1 dadurch gekennzeichnet, dass die Fördervorrichtung und die zwei Lieferstellen eine gesteuerte Einheit bilden, welche gemäss einem vorprogrammierten Ablauf unabhängig vom Arbeitstakt der Maschinen der vor-und nachgeschalteten Stufen betrieben werden kann.

3. Ein Fördersystem gemäss Anspruch 2 dadurch gekennzeichnet, dass die gesteuerte Einheit ein Ueberwachungssystem einschliesst, um die Uebertragung der Zwischenprodukte zwischen der Fördervorrichtung und den Lieferstellen zu überwachen.

4. Ein Fördersystem gemäss Anspruch 2 oder 3 dadurch gekennzeichnet, dass eine Steuerung für die gesteuerte Einheit vorgesehen und so programmiert ist, dass Förderoperationen nur unter vorbestimmten Betriebszuständen der gesteuerten Einheit ausgeführt werden können.

5. Ein Fördersystem gemäss einem der vorangehenden Ansprüche dadurch gekennzeichnet, dass Hin- und Herbewegungen der Fördervorrichtung in im wesentlichen vertikalen Richtungen stattfinden, während Bewegungen der Zwischenprodukte zwischen der Fördervorrichtung und einer Lieferstelle und umgekehrt in im wesentlichen horizontalen Richtungen stattfinden.

6. Ein Fördersystem gemäss einem der vorangehenden Ansprüche dadurch gekennzeichnet, dass Träger für die Zwischenprodukte vorgesehen sind und dass die Fördervorrichtung auch für die Beförderung von leeren Trägern zwischen den Stockwerken ausgelegt ist.

7. Ein Fördersystem gemäss einem der vorangehenden Ansprüche dadurch gekennzeichnet, dass die Fördervorrichtung mit mindestens einer Führungsschiene zum Tragen einer Mehrzahl von Zwischenprodukten bzw. Trägern versehen ist.

8. Ein Fördersystem gemäss Anspruch 7 dadurch gekennzeichnet, dass auf jedem Stockwerk eine entsprechende Führungsschiene angeordnet ist, um Zwischenprodukte bzw. Träger zwischen der Fördervorrichtung und der jeweiligen Lieferstelle zu leiten.

9. Ein Fördersystem gemäss einem der vorangehenden Ansprüche dadurch gekennzeichnet, dass jede Lieferstelle ein Arretierungsmittel beinhaltet, um Zwischenprodukte vorläufig in eine vorbestimmte Stelle zu positionieren.

Fig.1

Fig.2

Fig.3

Fig.4

Fig.5

Fig.6

Fig.7

Fig.8

Fig.9

Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 411 398 (KUREHA SPINNING CO. LTD et al.) * Seiten 1,2; Figuren 1,3,12 * | 1 | D 01 G 27/00 |
| A | | 3,4,7,9 | B 65 G 37/00 B 65 H 67/06 |
| | --- | | |
| Y | DE-A-2 100 842 (RENE BLASER) * Seiten 4-6,10; Figuren 1,2,5,9 * | 1 | |
| A | | 2-6,9 | |
| | --- | | |
| A | EP-A-0 092 816 (GEBHARDT FÖRDERTECHNIK GmbH) | | |
| | ----- | | |

RECHERCHIERTE SACHGEBIETE (Int. Cl.4)

D 01 G
B 65 G
B 65 H

Der vorliegende Recherchenbericht wurde für alle Patentansprüche erstellt

| Recherchenort | Abschlußdatum der Recherche | Prüfer |
|---|---|---|
| DEN HAAG | 02-08-1989 | MUNZER E. |

EPO FORM 1503 03.82 (P0403)